# EUROPEAN PATENT SPECIFICATION

(11) **EP 3 362 681 B1**
(45) Date of publication and mention of the grant of the patent: **30.12.2020**
(21) Application number: 16855002.8
(22) Date of filing: 14.10.2016
(51) Int. Cl.: F03D 5/02, B61B 11/00, F03D 9/32, F03D 9/43, B61B 12/00

(54) **SYSTEM AND METHOD FOR HARNESSING WIND ENERGY**
SYSTEM UND VERFAHREN ZUR NUTZUNG VON WINDENERGIE
SYSTÈME ET PROCÉDÉ DE RÉCOLTE D'ÉNERGIE ÉOLIENNE

(30) Priority: 15.10.2015 US 201562241777 P
(43) Date of publication of application: 22.08.2018
(73) Proprietor: Bigfield Power Oy, 90240 Oulu (FI)
(72) Inventor: ISOAHO, Markku, 90240 Oulu (FI)
(74) Representative: Boco IP Oy Ab
(86) International application number: PCT/FI2016/000025
(87) International publication number: WO 2017/064363

(56) References cited:
- EP-A1- 0 841 480
- EP-A1- 0 841 480
- WO-A1-2011/044130
- CN-A- 103 448 734
- CN-U- 202 827 573
- US-A- 3 887 817
- US-A1- 2007 126 241
- US-A1- 2012 049 533

## Description

The invention relates to a system and a method for harnessing wind energy.

### BACKGROUND

Ski lifts require a lot of energy to operate. However, for the better part of the year they stand idle, serving no purpose. During this idle time the ski lifts could be put to use in wind energy production. Ski lifts typically run from 500 to 1,000 hours a year. Considering that a year consists of 8,760 hours, their utilization rate stands at a low 10 per cent or so.

It is a known fact that ski slopes are relatively windy, making exploitation of wind energy in these areas highly practical. Furthermore, harnessing wind energy on ski slopes is ecologically sound as it offsets their detrimental effect on the landscape.

To date, no solutions have emerged to the high power consumption and off-season inactivity of ski lifts. It should be noted that while aerial lifts, which carry passengers on chairs and in gondolas, find limited use in the summertime and outside of the ski season in general, the simpler surface lifts, which tow skiers and snowboarders uphill, off-season reuse is not an option.

Patent publication EP0841480 discloses a wind energy converter having a pulling cable and a multitude of kites attached to the cable. The pulling cable is maintained in the air by the kites. Kites rise and descent and thus move the pulling cable and the rotation energy of the cable is to be transmitted to a generator disposed on the ground. Patent publication US20120049533 discloses a similar system where cables are hold in the air by buoyant aircrafts such as gas balloons. The cable is moved by rising and descending kite or sail arrangements. The moving cable generate pulling and tensile force, which can be used to drive the rotating shaft of an electric generator. These kind of aerial wind energy converters are quite complicated and demands constant supervision.

The idea was born during the development of various wind turbine models, when their applicability to ski resorts and ski lifts was considered.

### BRIEF DESCRIPTION

The object of the invention is a solution that can significantly reduce the disadvantages and drawbacks of the prior art. In particular, the object of the invention is a solution that allows using existing structures for wind power harnessing.

The objects of the invention are attained with an arrangement that is characterised by what is stated in the independent patent claims. Some advantageous embodiments of the invention are disclosed in the dependent claims.

The invention utilizes a ski lift for wind power generation outside of the ski season. The carriers on the ski lift are replaced by drogue parachutes that pull the haul rope either uphill or downhill, depending on the prevailing wind. The parachutes open in a tailwind and when facing a headwind, recoiling rope mechanisms keeps them closed. The haul rope rotates the electrical drive motor of the ski lift, causing it to generate electrical energy.

The system comprises the parachute assemblies and the additional structures that are required to reconfigure a conventional ski lift as a wind-driven electrical generator. The changes required to the actual ski lift structures are kept to a minimum. The parachutes and the other add-on structures are dimensioned to suit existing structures. As a variation, the parachutes can be replaced by sail or wing-like structures, similar to those on sailboats and aircraft.

One embodiment of the invention is a system for harnessing wind power according to claim 1. In one advantageous embodiment of the invention the system comprises a ski lift having a haul rope and carriers, and the ski lift is arranged to be modified by replacing the carriers at least partly by wind catching structures that are arranged to move the haul rope when wind effects to at least some of the wind catching structures. The system further comprises a generator and the haul rope is connected to the generator and the moving haul rope is arranged to transfer mechanical energy to the generator that is arranged to produce electrical energy.

In one embodiment of the apparatus according to the invention, the generator is an electric motor of the ski lift.

In a second embodiment of the apparatus according to the invention the wind catching structures are arranged to be foldable or otherwise modifiable when the haul rope brings the wind-catching structures to a position where they are at least partly against the wind.

In a third embodiment there is at both ends of the ski lift a bull wheel or similar structure and near the bullwheels there are arrangements for closing the wind-catching structures before the haul rope brings the wind-catching structures around their turning points.

In a fourth embodiment of the system according to the invention, the haul rope is arranged to move in one direction regardless of the wind direction and the wind-catching structures are arranged to catch wind where the haul rope that moves the haul rope in the said direction.

In a fifth embodiment of the system according to the invention, the haul rope is arranged to move in both directions and the direction of the haul rope is the direction where the wind-catching structures are arranged to catch the biggest amount of wind power.

In a sixth embodiment of the system according to the invention, the wind catching structures are parachutes, sails or rigid wing sail constructions or combinations thereof.

In a seventh embodiment of the system according to the invention, the parachutes are arranged to be open when in a tailwind and to be closed when facing a headwind.

In an eighth embodiment of the system according to the invention, the wind-catching structures are arranged to go up in a first position to go down in a second position or vice versa and the choosing of the position depends the direction of the wind.

A method for harnessing wind power according to claim 9 uses steps where a ski lift comprising a haul rope and carriers is modified by replacing said carriers by wind-catching structures, when wind blows, at least some of the wind-catching structures are moved by the wind and the wind-catching structures moved by the wind move the haul rope and the moving haul rope rotates a generator that produces electricity.

### DESCRIPTIONS OF THE FIGURES

In the following, the invention is described in detail. The description refers to the accompanying drawings, in which
- Figure 1: depicts a conventional ski lift, more specifically a surface lift of the platter type,
- Figure 2A: shows a side view of the ski lift from FIG. 1, reconfigured for capturing wind energy,
- Figure2B: shows a top view of the ski lift from FIG. 1, reconfigured for capturing wind energy,
- Figure3A: illustrates the ski lift from FIG. 2B in its entirety, while capturing wind energy when the wind is blowing uphill, and
- Figure3B: illustrates the ski lift from FIG. 2B in its entirety, while capturing wind energy when the wind is blowing downhill,

### DETAILED DESCRIPTIONS OF THE FIGURES

The embodiments in the following description are given as examples only and someone skilled in the art can carry out the basic idea of the invention also in some other way than what is described in the description. Though the description may refer to a certain embodiment or embodiments in several places, this does not mean that the reference would be directed towards only one described embodiment or that the described characteristic would be usable only in one described embodiment. The individual characteristics of two or more embodiments may be combined and new embodiments of the invention may thus be provided.

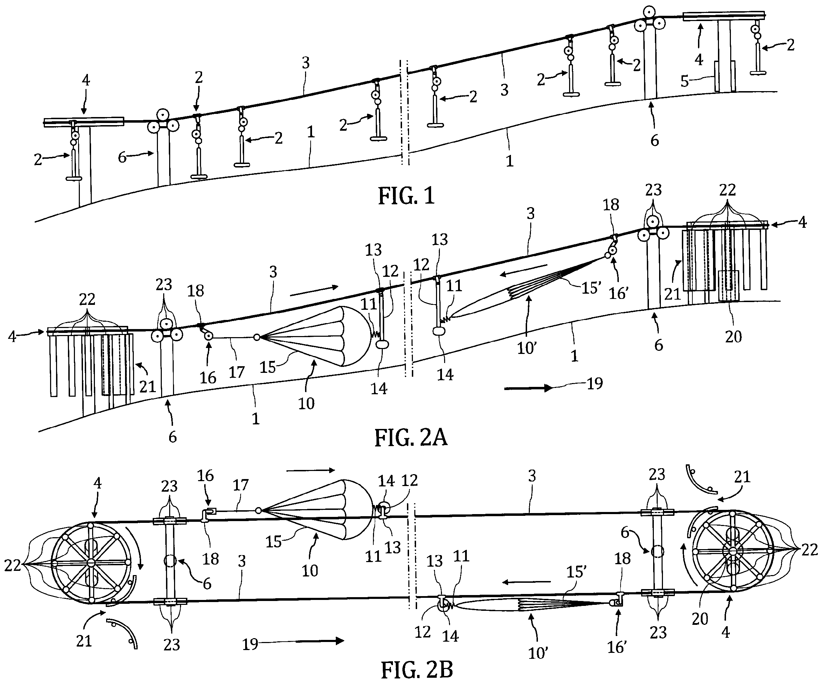

The purpose of a conventional surface ski lift, as shown in FIG.1, is to tow skiers up a slope (1). To this end, carriers (2)-in this picture, by way of an example, of the platter type-are clamped to a haul rope (3) and move uphill on one side of the ski lift and return down on the other side. The haul rope loops around two bullwheels (4), one at the top and the other at the bottom. An electrical motor (5) drives the top bull wheel, providing motion for the haul rope. In-line towers (6) support and hold down the haul rope.

The embodiment, depicted in FIG. 2A, from the side and in FIG. 2B from the top, is based on the conventional ski lift pictured in FIG. 1. A drogue parachute (10) is connected at its apex with a spring coil (11) to a vertical bar (12) that swivels from a fixed grip (13). The grip is clamped to the haul rope (3). A weight (14) located at the bottom of the bar keeps the bar upright at all times. The shroud lines (15) of the parachute are connected to a recoiling rope mechanism (16) that winds and unwinds a rope (17) under spring action, similar to when the said mechanism is connected to a carrier in normal ski lift operation. The recoiling rope mechanism is fixed to the haul rope with a fixed grip (18).

When the wind blows uphill (19), the left drogue parachute (10) deploys under the influence of the wind, pulling out the rope (17) from inside the recoiling rope mechanism (16). The force exerted by the parachute is transferred through the haul rope (3) to the electric generator (20), causing it to rotate and produce electrical energy. The right parachute (10'), which travels against the wind and downward is held in a collapsed, low-drag state by its spring-loaded recoiling rope mechanism (16').

At both ends of the lift, curved blade assemblies (21) collapse the open parachutes before they round their turning points. The bullwheels (4) are fitted with rotating guide rods (22), which ensure that the collapsed parachutes won't get entangled. The distance between the ski slope (1) and the haul rope (3) determines the maximum diameter of the parachute (10). The vertical bars (12) and the recoiling rope mechanisms (16 and 16') with their respective grips (13 and 18) can traverse the shears (23) on the in-line towers (6) in a similar fashion to the carrier assemblies on a normally-configured ski lift.

To reduce cost, it is advisable to reuse the structures and the electric motor that drives the ski lift in normal operation for power generation, with the electric motor functioning as an electrical generator when the ski lift is configured for wind energy production. For example, the spring-loaded recoiling rope mechanism as found on surface lifts, can be utilized in opening and closing the parachutes.

When the carriers-the tow bars (T, J and platter type), chairs or gondolas-are replaced by the parachute assemblies on a one-to-one basis, in dimensioning the latter, the energy consumption of a single carrier can serve as a yardstick for the amount of energy a single parachute should produce. In the following calculation, it is assumed that the number of drogue parachutes equals the number of carriers that they replace. If the motor of the ski lift draws 27 kW moving 18 carriers, the energy consumption of a single carrier is 27 kW divided by 18, equals 1.5 kW. When the ski lift is reconfigured to produce the same amount of energy from the wind, the same number of parachutes, 18, is used. Since the power generated by a parachute can be calculated from the accepted "rule of thumb" 3.1 m²/ kW at a wind speed of 8 m/s [1], the surface area of a parachute needs to be 4.7 m².It follows that its diameter is 3 m.

Since the parachute assemblies move up and down the ski slope, fixed to the haul rope on opposite sides of the ski lift, their added weight poses no problems. The extra weight is eliminated with the same counterweight principle as employed in a traditional elevator, leading only to friction losses. Since the parachute assemblies weigh as much going upward as downward, better balancing is achieved than when the ski lift operates in its traditional role, in which the bars, chairs or gondolas always descend empty, without skiers.

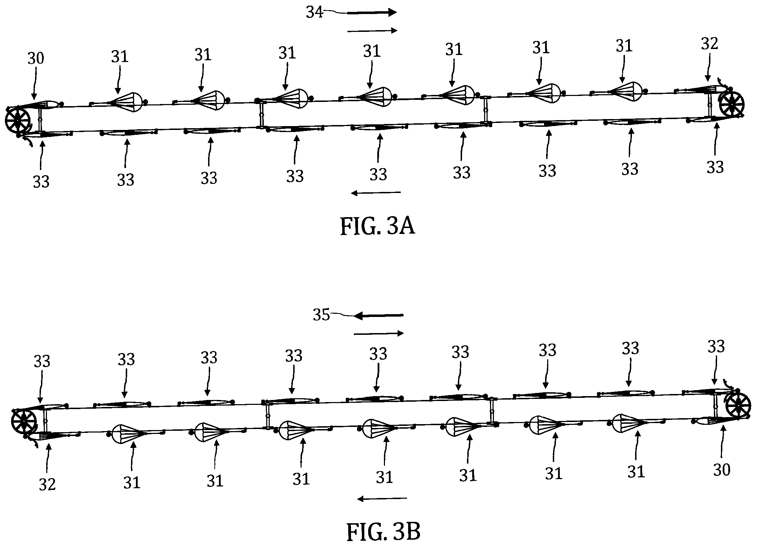

On a ski slope the wind is blowing from the foot upwards for most of the time, but under certain climatic conditions or at certain times during the day the wind will blow down the slope instead. The invention autonomously adapts to either condition, as shown in FIG. 3A and FIG. 3B. In both figures, reference numbers 30 mark deploying parachutes. Similarly, numbers 31 point to fully deployed parachutes. Collapsing parachutes are marked with numbers 32. Fully collapsed parachutes are referenced by number 33. Arrow 34 indicates an uphill wind, while arrow 35 represents a downhill wind. It should be noted that the haul rope always turns in the same direction-clockwise in FIG. 3A and FIG. 3B-regardless of the prevailing wind.

As many drogue parachutes can be anchored to the haul rope of a ski lift as space and strength of the construction permit. Their number can be equal or higher than that of carriers on a conventional ski lift.

In another embodiment of the invention, wind energy is harnessed using a sail structure similar to that on a sailboat. Also, rigid wing sail constructions that swivel or change shape can be used instead of a more conventional sail. A sail or wing sail has the advantage of better versatility in a wider variety of wind conditions. However, a drogue parachute solution appears to be the most economical and least complicated in use.

Some advantageous embodiments of the method and device according to the invention have been described above. The invention is however not limited to the embodiments described above, but the inventive idea can be applied in numerous ways within the scope of the claims.

### REFERENCES

The Nature of Boats: Insights and Esoterica for the Nautically Obsessed, Dave Gerr, McGraw Hill Professional, 1995, ISBN 007024233X, 9780070242333

## Claims

1. A system for harnessing wind power, said system comprising a ski lift having a haul rope (3), wherein said system further comprises a generator (20) and wind-catching structures (10; 31), and the haul rope is connected to the generator (20) and the moving haul rope is arranged to transfer mechanical energy to the generator that is arranged to produce electrical energy, **characterised in that** the ski lift has carriers (2) clamped to the haul rope and is arranged to be modified by replacing the carriers at least partly by wind-catching structures (10; 31) that are configured to move the haul rope when wind affects at least some of the wind-catching structures, and the generator (20) is an electric motor (5) of the ski lift.

2. The system according to claim 1, **characterised in that** the wind-catching structures (10; 31) are configured to be foldable or otherwise modifiable when the haul rope (3) brings the wind-catching structures to a position where they are at least partly against the wind.

3. The system according to claim 2, **characterised in that** at both ends of the ski lift there is a bull wheel (4) or similar structure and near the bullwheels there are arrangements (21) for closing the wind-catching structures before the haul rope (3) brings the wind-catching structures around their turning points.

4. The system according to any of claims 1 - 3, **characterised in that** the haul rope (3) is configured to move in one direction regardless of the wind direction and the wind-catching structures (10; 31) are configured to catch wind in a part of the haul rope that moves the haul rope in the said direction.

5. The system according to any of claims 1 - 3, **characterised in that** the haul rope (3) is configured to move in both directions and the direction of the haul rope is the direction where the wind catching structures (10; 31) are configured to catch the biggest amount of wind power.

6. The system according to any of claims 1 - 5, **characterised in that** the wind catching structures (10; 31) are parachutes, sails or rigid wing sail constructions or combinations thereof.

7. The system according to claims 6, **characterised in that** the parachutes are configured to be open (10; 31) when in a tailwind and to be closed (10'; 33) when facing a headwind.

8. The system according to any of claims 1 - 7, **characterised in that** the wind-catching structures (10; 31) are configured to go up in a first position, to go down in a second position or vice versa and the selection of the position depends on the direction of the wind.

9. A method for harnessing wind power by using a system according to claim 1, said method comprising:
- modifying a ski lift comprising a haul rope and carriers by replacing said carriers by wind-catching structures
- when the wind blows, at least some of the wind-catching structures are moved by the wind and the wind-catching structures moved by the wind move the haul rope, and
- the moving haul rope rotates a generator that produces electricity.

## Patentansprüche

1. System zur Gewinnung von Windkraft, wobei das System einen Skilift mit einem Zugseil (3) umfasst, wobei das System ferner einen Generator (20) und Windfangstrukturen (10; 31) umfasst, und das Zugseil mit dem Generator (20) verbunden ist und das sich bewegende Zugseil dazu eingerichtet ist, mechanische Energie an den Generator zu übertragen, der dazu eingerichtet ist, elektrische Energie zu erzeugen, **gekennzeichnet dadurch, dass** der Skilift am Zugseil angeklemmte Trägerelemente (2) aufweist und dazu eingerichtet ist, so abgewandelt zu werden, dass die Trägerelemente mindestens teilweise durch Windfangstrukturen (10; 31) ersetzt werden, die dazu ausgelegt sind, das Zugseil zu bewegen, wenn Wind auf mindestens einige der Windfangstrukturen einwirkt, und der Generator (20) ein Elektromotor (5) des Skilifts ist.

2. System nach Anspruch 1, **gekennzeichnet dadurch, dass** die Windfangstrukturen (10; 31) so ausgelegt sind, dass sie klappbar oder anderweitig modifizierbar sind, wenn das Zugseil (3) die Windfangstrukturen zu einer Position führt, wo sie sich mindestens teilweise im Wind befinden.

3. System nach Anspruch 2, **gekennzeichnet dadurch, dass** es an beiden Enden des Skilifts eine Seilscheibe (4) oder ähnliche Struktur gibt und es in der Nähe der Seilscheiben Anordnungen (21) gibt, um die Windfangstrukturen zu schließen, bevor das Zugseil (3) die Windfangstrukturen um ihre Wendepunkte führt.

4. System nach einem der Ansprüche 1 bis 3, **gekennzeichnet dadurch, dass** das Zugseil (3) dazu ausgelegt ist, sich unabhängig von der Windrichtung in eine Richtung zu bewegen, und die Windfangstrukturen (10; 31) dazu ausgelegt sind, den Wind in einem Teil des Zugseils einzufangen, der das Zugseil in diese Richtung bewegt.

5. System nach einem der Ansprüche 1 bis 3, **gekennzeichnet dadurch, dass** das Zugseil (3) dazu ausgelegt ist, sich in beide Richtungen zu bewegen, und die Richtung des Zugseils die Richtung ist, in der die Windfangstrukturen (10; 31) zum Einfangen der größten Menge an Windkraft ausgelegt ist.

6. System nach einem der Ansprüche 1 bis 5, **gekennzeichnet dadurch, dass** die Windfangstrukturen (10; 31) Fallschirme, Segel oder Starrflügelsegelkonstruktionen oder Kombinationen derselben sind.

7. System nach Anspruch 6, **gekennzeichnet dadurch, dass** die Fallschirme so ausgelegt sind, dass sie offen sind (10; 31), wenn in einem Rückenwind, und geschlossen sind (10'; 33), wenn einem Gegenwind ausgesetzt.

8. System nach einem der Ansprüche 1 bis 7, **gekennzeichnet dadurch, dass** die Windfangstrukturen (10; 31) dazu ausgelegt sind, nach oben in eine erste Stellung zu gehen, nach unten in eine zweite Stellung zu gehen, oder umgekehrt, und die Auswahl der Stellung von der Richtung des Windes abhängt.

9. Verfahren zur Gewinnung von Windkraft durch Verwendung eines Systems nach Anspruch 1, wobei das Verfahren umfasst:
- Modifizieren eines Skilifts, der ein Zugseil und Trägerelemente umfasst, indem die Trägerelemente durch Windfangstrukturen ersetzt werden
- wenn der Wind bläst, werden mindestens einige der Windfangstrukturen vom Wind bewegt, und die vom Wind bewegten Windfangstrukturen bewegen das Zugseil, und
- das sich bewegende Zugseil dreht einen Generator, der Elektrizität erzeugt.

## Revendications

1. Système de récolte d'énergie éolienne, ledit système comprenant un téléski ayant un câble de traction (3), dans lequel le système comprend également une génératrice (20) et des structures de captage éolien (10; 31), et le câble de traction est relié à la génératrice (20) et le câble de traction en mouvement est agencé pour transmettre de l'énergie mécanique à la génératrice qui est agencée pour produire de l'énergie électrique, **caractérisé en ce que** le téléski comporte des supports (2) attachés au câble de traction et est agencé pour être modifié par le remplacement au moins partiel des supports par des structures de captage éolien (10; 31) qui sont agencées pour mettre en mouvement le câble de traction lorsque le vent agit sur au moins quelques-unes des structures de captage éolien, et la génératrice (20) est un moteur électrique (5) du téléski.

2. Système selon la revendication 1, **caractérisé en ce que** les structures de captage éolien (10; 31) sont configurées pour être pliables ou autrement modifiables lorsque le câble de traction (3) transporte les structures de captage éolien vers une position où elles sont au moins partiellement exposées au vent.

3. Système selon la revendication 2, **caractérisé en ce qu'**il y a, aux deux extrémités du téléski, une poulie (4) ou structure similaire et qu'il y a, à proximité des poulies, des mécanismes (21) pour fermer les structures de captage éolien avant que le câble de traction (3) conduise les structures de captage éolien autour de leurs points de renvoi.

4. Système selon l'une des revendications 1 à 3, **caractérisé en ce que** le câble de traction (3) est configuré pour se déplacer dans une direction, quelle que soit la direction du vent, et les structures de captage éolien (10; 31) sont configurées pour capter le vent dans une partie du câble de traction qui fait se déplacer le câble de traction dans ladite direction.

5. Système selon l'une des revendications 1 à 3, **caractérisé en ce que** le câble de traction (3) est configuré pour se déplacer dans les deux directions et la direction du câble de traction et la direction où les structures de captage éolien (10; 31) sont configurées pour capter la plus grande quantité d'énergie éolienne.

6. Système selon l'une des revendications 1 à 5, **caractérisé en ce que** les structures de captage éolien (10; 31) sont des parachutes, des voiles ou des constructions de voiles d'aile rigide ou des combinaisons de celles-ci.

7. Système selon la revendication 6, **caractérisé en ce que** les parachutes sont configurées pour être ouvertes (10; 31) en cas de vent arrière et être fermées (10'; 33) en cas de vent debout.

8. Système selon l'une des revendications 1 à 7, **caractérisé en ce que** les structures de captage éolien (10; 31) sont configurées pour monter dans une première position, descendre dans une deuxième position, ou vice versa, et le choix de la position dépend de la direction du vent.

9. Procédé de récolte d'énergie éolienne par l'utilisation d'un système selon la revendication 1, ledit procédé comprenant :
- modifier un téléski comprenant un câble de traction et des supports en remplaçant les supports par des structures de captage éolien
- lorsque le vent souffle, au moins quelques-unes des structures de captage éolien sont mises en mouvement par le vent et les structures de captage éolien mises en mouvement par le vent font se déplacer le câble de traction, et
- le câble de traction en mouvement tourne une génératrice qui produit de l'électricité.
